# EUROPEAN PATENT APPLICATION

(11) **EP 4 455 096 A1**
(43) Date of publication of application: **30.10.2024**
(21) Application number: 22911059.8
(22) Date of filing: 15.12.2022
(51) Int. Cl.: C02F 1/50, C02F 1/76

(54) **METHOD FOR SUPPRESSING MICROORGANISM CONTAMINATION IN WATER SYSTEM**

(30) Priority: 20.12.2021 JP 2021205985
(71) Applicant: Kurita Water Industries Ltd., Tokyo 164-0001 (JP)
(72) Inventor: OHTSUKA, Yuta, Tokyo 164-0001 (JP); TAKAHASHI, Junichi, Tokyo 164-0001 (JP); HAYAKAWA, Kunihiro, Tokyo 164-0001 (JP)
(74) Representative: Becker, Eberhard
(86) International application number: PCT/JP2022/046154
(87) International publication number: WO 2023/120351

(57) **Abstract**

Provided is a method for suppressing microorganism contamination in a water system that contains a reducing agent, the method being characterized in that a stabilized chlorine-based oxidizing agent comprising a chlorine-based oxidizing agent and a sulfamic acid compound, and/or a stabilized bromine-based oxidizing agent comprising a bromine-based oxidizing agent and a sulfamic acid compound is intermittently added to the water system so that the ratio of the time when the stabilized chlorine-based oxidizing agent and/or stabilized bromine-based oxidizing agent is not being added relative to the time when the same is being added of is 0.1 or more.

## Description

### Technical Field

The present invention relates to a method for suppressing microorganism contamination in a water system. The method for suppressing microorganism contamination in the water system of the present invention is applied to, for example, a reverse osmosis (RO) membrane water supply system and is useful as a method for suppressing slime in the system and preventing fouling of the reverse osmosis membrane.

### Related Art

RO membrane devices that can efficiently remove electrolytes and medium and low molecular weight organic components are widely used in seawater desalination plants and waste water recovery plants. In a water treatment apparatus including the RO membrane device, usually, pretreatment devices such as a pressure filtration device, a gravity filtration device, a coagulation sedimentation treatment device, a pressure flotation filtration device, an immersion membrane device, and a membrane type pretreatment device are provided upstream of the RO membrane device. The water to be treated is pretreated by these pretreatment devices and then supplied to the RO membrane device for RO membrane separation treatment.

In such a water treatment apparatus, the microorganisms contained in the water to be treated grow in the piping of the apparatus or on the membrane surface and form slime, which may cause problems such as odor generation due to microorganism proliferation in the system and a decrease in the amount of water permeating through the RO membrane.

In order to prevent contamination caused by microorganisms, a commonly used method is to constantly or intermittently add a bactericide to the water to be treated, and sterilize the water to be treated or the inside of the apparatus while treating the water. A chlorine-based oxidizing agent such as sodium hypochlorite is used as the bactericide because it is inexpensive and relatively easy to handle. However, the RO membrane is generally a membrane that does not have chlorine resistance such as a polyamide-based polymer membrane, so if a chlorine-based oxidizing agent is added, the removal rate may decrease due to oxidative deterioration caused by free chlorine derived from the chlorine-based oxidizing agent.

Therefore, it is known to add a chlorine-based oxidizing agent on the upstream side of the water treatment apparatus and add a reducing agent such as sodium bisulfite (SBS) on the inlet side of the RO membrane device to reduce and remove the residual free chlorine, and after addition of the reducing agent, add a stabilized chlorine-based oxidizing agent or a stabilized bromine-based oxidizing agent such as chloramine or sodium chlorosulfamate, or a slime control agent such as an isothiazolone compound that suppresses microorganism growth, in order to suppress microorganism contamination in the piping or on the RO membrane surface from the addition point of the reducing agent to the inlet of the RO membrane device (Patent Documents 1 to 3).

Among these, a stabilized chlorine-based oxidizing agent and a stabilized bromine-based oxidizing agent have been widely used for their capability to suppress microorganism contamination. However, the suppression effects of the stabilized chlorine-based oxidizing agent and the stabilized bromine-based oxidizing agent were more prominent in some water systems than in others.

It is known that sodium bisulfite (SBS), a reducing agent that is commonly added to reduce free chlorine upstream of the RO membrane, is usually added in excess to ensure that membrane deterioration is prevented (Non-Patent Document 1).

### Citation List

### Patent Documents

[Patent Document 1] Japanese Patent Application Laid-Open No. 1-104310
[Patent Document 2] Japanese Patent Application Laid-Open No. 1-135506
[Patent Document 3] Japanese Patent Application Laid-Open No. 2006-263510

### Non-Patent Document

[Non-Patent Document 1] Water Solutions "FilmTecTM Reverse Osmosis Membranes Technical Manual" Form No. 45-DO1504-en, Rev. 7, February 2021 [Internet] <https://www. dupont.com/content/dam/dupont/amer/us/en/water-solutions/public/documents/en/45-D01504-en.pdf#page64>69 pages

### SUMMARY OF INVENTION

### Technical Problem

An object of the present invention is to provide a method for suppressing microorganism contamination in a water system, which can stably and effectively obtain the effects of suppressing microorganism contamination by adding a stabilized chlorine-based oxidizing agent composed of a chlorine-based oxidizing agent and a sulfamic acid compound and/or a stabilized bromine-based oxidizing agent composed of a bromine-based oxidizing agent and a sulfamic acid compound in a water system in which a reducing agent such as sodium bisulfite is added and which contains the residual reducing agent.

### Solution to Problem

The inventors of the present invention have found that the above problem can be solved by intermittently adding a stabilized chlorine-based oxidizing agent and/or a stabilized bromine-based oxidizing agent.

The present invention is based on the following.
[1] A method for suppressing microorganism contamination in a water system that contains a reducing agent is characterized in including: intermittently adding a stabilized chlorine-based oxidizing agent composed of a chlorine-based oxidizing agent and a sulfamic acid compound, and/or a stabilized bromine-based oxidizing agent composed of a bromine-based oxidizing agent and a sulfamic acid compound to the water system so that a ratio of an addition pause time to an addition time of the stabilized chlorine-based oxidizing agent and/or the stabilized bromine-based oxidizing agent is 0.1 or more.
[2] The method for suppressing microorganism contamination in the water system according to [1] is characterized in that the water system is a reverse osmosis membrane water supply system.
[3] The method for suppressing microorganism contamination in the water system according to [1] or [2] is characterized in that a concentration of the reducing agent in the water system is 0.01 mg/L-Cl₂ or more.
[4] The method for suppressing microorganism contamination in the water system according to any one of [1] to [3] is characterized in that the reducing agent is sodium bisulfite.
[5] The method for suppressing microorganism contamination in the water system according to any one of [1] to [4] is characterized in that the stabilized chlorine-based oxidizing agent and/or the stabilized bromine-based oxidizing agent is intermittently added to the water system so that the ratio of the addition pause time to the addition time of the stabilized chlorine-based oxidizing agent and/or the stabilized bromine-based oxidizing agent is 1.0 or more and 100 or less.
[6] The method for suppressing microorganism contamination in the water system according to any one of [1] to [5] is characterized in that the stabilized chlorine-based oxidizing agent is a stabilized chlorine-based oxidizing agent in which a ratio of the sulfamic acid compound to 1 mole of effective chlorine of the chlorine-based oxidizing agent is 0.5 to 5.0 moles, and the stabilized bromine-based oxidizing agent is a stabilized bromine-based oxidizing agent in which a ratio of the sulfamic acid compound to 1 mole of effective chlorine conversion amount of the bromine-based oxidizing agent is 0.5 to 5.0 moles.
[7] The method for suppressing microorganism contamination in the water system according to any one of [1] to [6] is characterized in that an addition amount of the stabilized chlorine-based oxidizing agent and/or the stabilized bromine-based oxidizing agent to the water system during the addition time is 0.1 to 100 mg/L-Cl₂ as an addition amount of effective chlorine conversion.

### Effects of Invention

According to the present invention, it is possible to stably and effectively suppress microorganism contamination by adding a stabilized chlorine-based oxidizing agent and/or a stabilized bromine-based oxidizing agent in a water system to which a reducing agent such as sodium bisulfite is added and which contains the residual reducing agent.

### BRIEF DESCRIPTION OF DRAWINGS

[FIG. 1] FIG. 1 is a graph showing the results of Example 1 and Comparative Example 1.
[FIG. 2] FIG. 2 is an explanatory diagram showing the relationship between the oxidizing agent concentration and the reducing agent concentration based on intermittent addition of the oxidizing agent (stabilized chlorine-based oxidizing agent and/or stabilized bromine-based oxidizing agent) according to the present invention, and the difference from the case of continuous addition.

### DESCRIPTION OF EMBODIMENTS

An embodiment of the method for suppressing microorganism contamination in a water system according to the present invention will be described in detail below.

The method for suppressing microorganism contamination in a water system according to an embodiment of the present invention is a method for suppressing microorganism contamination in a water system that contains a reducing agent, characterized in including: intermittently adding a stabilized chlorine-based oxidizing agent and/or a stabilized bromine-based oxidizing agent composed of a bromine-based oxidizing agent and/or a chlorine-based oxidizing agent and a sulfamic acid compound to the water system so that a ratio of an addition pause time to an addition time of the stabilized chlorine-based oxidizing agent and/or the stabilized bromine-based oxidizing agent is 0.1 or more.

### <Mechanism>

As a result of investigation to solve the problem in the conventional art, the inventors have found that, as described below, the reducing agent contained in the water system affects the microorganism contamination suppression effects of the stabilized chlorine-based oxidizing agent and the stabilized bromine-based oxidizing agent.

A reducing agent such as sodium bisulfite (SBS) in water also reduces the stabilized chlorine-based oxidizing agent and the stabilized bromine-based oxidizing agent added in a later stage. Due to this reaction, the stabilized chlorine-based oxidizing agent composed of a chlorine-based oxidizing agent and a sulfamic acid compound and/or the stabilized bromine-based oxidizing agent composed of a bromine-based oxidizing agent and a sulfamic acid compound releases sulfamic acid. In this reaction, the higher the concentration of the residual reducing agent, the higher the ratio of sulfamic acid to effective chlorine in the system. As the ratio of sulfamic acid increases, the reactivity of the components decreases due to equilibrium.

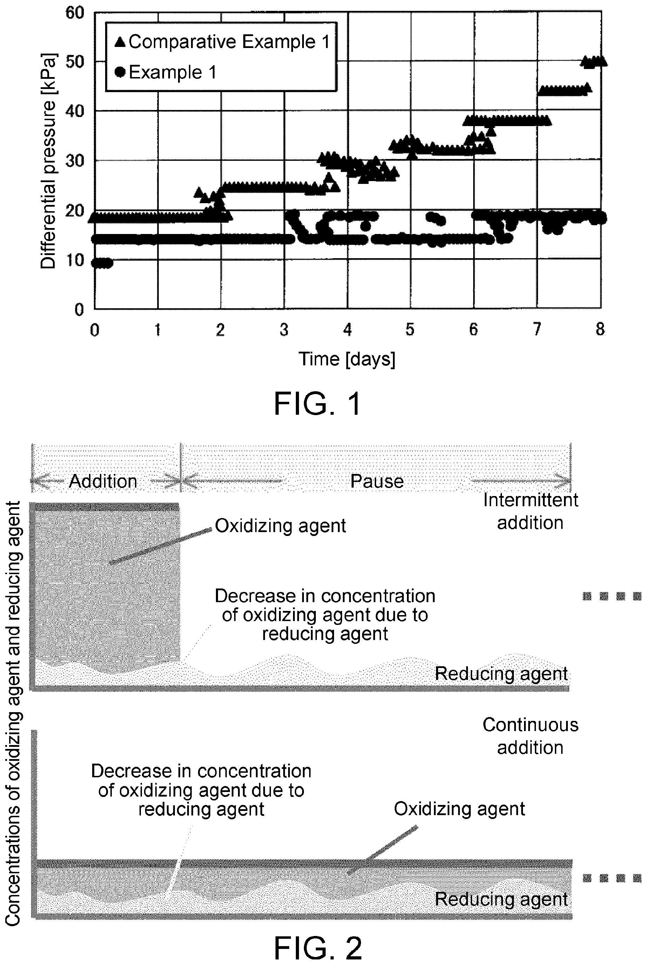

However, by intermittently adding a stabilized chlorine-based oxidizing agent and/or a stabilized bromine-based oxidizing agent, in the addition time among the addition time and the pause time of intermittent addition, as shown in FIG. 2, the ratio of the decrease due to a reducing agent such as sodium bisulfite to the total chlorine concentration can be made smaller than that in the case of continuous addition of the same usage amount of oxidizing agent. Therefore, the reactivity is less likely to decrease, and the cumulative amount of the stabilized chlorine-based oxidizing agent and/or the stabilized bromine-based oxidizing agent due to a reducing agent such as sodium bisulfite during the entire addition time and pause time of intermittent addition can also be made smaller than that in the case of continuous addition of the same usage amount of oxidizing agent. As a result, the microorganism contamination suppression effects can be effectively exerted.

### <Water system containing a reducing agent>

The water system to be treated in the present invention is not particularly limited as long as the water system contains a reducing agent, but as described above, the present invention is effectively applied to a water system (containing a reducing agent) that, in a water treatment apparatus including an RO membrane device, after a chlorine-based oxidizing agent is added in a previous stage, in order to prevent oxidative deterioration of the RO membrane, a reducing agent such as sodium bisulfite (SBS) is added in excess relative to the chlorine-based oxidizing agent, resulting in residual reducing agent, and then a stabilized chlorine-based oxidizing agent and/or a stabilized bromine-based oxidizing agent is added in order to suppress microorganism contamination of the piping and the RO membrane, that is, an RO membrane water supply system.

The reducing agent contained in the water system is typically sodium bisulfite (SBS), but other reducing agents such as sodium thiosulfate may also be used.

To effectively obtain the effects of the present invention, it is preferable that the reducing agent concentration in the water system containing the residual reducing agent is 0.01 mg/L-Cl₂ or more, and this concentration is more preferably 0.1 mg/L-Cl₂ or more. On the other hand, if the reducing agent concentration is excessively high, the stabilized chlorine-based oxidizing agent and/or the stabilized bromine-based oxidizing agent added in the later stage may be reduced accordingly, increasing the required amount to be added and resulting in an increase in treatment costs. Therefore, the reducing agent concentration in the water system to be treated is preferably 5 mg/L-Cl₂ or less, and particularly preferably 2 mg/L-Cl₂ or less. In the present invention, the reducing agent concentration is expressed as a concentration converted into free chlorine, that is, a concentration of free chlorine that can be reduced by the reducing agent of that concentration (mg/L-Cl₂).

There is no particular limitation on the pH of the water system to be treated, which may be in a range of 2 to 12.

### <Stabilized chlorine-based oxidizing agent/stabilized bromine-based oxidizing agent>

The stabilized chlorine-based oxidizing agent used in the present invention is composed of a chlorine-based oxidizing agent and a sulfamic acid compound.

The stabilized bromine-based oxidizing agent used in the present invention is composed of a bromine-based oxidizing agent and a sulfamic acid compound.

There is no particular limitation on the chlorine-based oxidizing agent used in the stabilized chlorine-based oxidizing agent, which can include, for example, chlorine gas, chlorine dioxide, hypochlorous acid or salts thereof, chlorous acid or salts thereof, chloric acid or salts thereof, perchloric acid or salts thereof, chlorinated isocyanuric acid or salts thereof, etc. Among these, specific examples of the salt form can include alkali metal hypochlorite salts such as sodium hypochlorite and potassium hypochlorite; alkaline earth metal hypochlorite salts such as calcium hypochlorite and barium hypochlorite; alkali metal chlorite salts such as sodium chlorite and potassium chlorite; alkaline earth metal chlorite salts such as barium chlorite; other metal chlorite salts such as nickel chlorite; ammonium chlorate; alkali metal chlorate salts such as sodium chlorate and potassium chlorate; alkaline earth metal chlorate salts such as calcium chlorate and barium chlorate, etc. These chlorine-based oxidizing agents may be used alone or in combination of two or more. Among these, hypochlorite can be preferably used since it is easy to handle.

There is no particular limitation on the bromine-based oxidizing agent used in the present invention, which can include, for example, liquid bromine, bromine chloride, bromic acid or salts thereof, hypobromous acid or salts thereof, etc. These bromine-based oxidizing agents may be used alone or in combination of two or more.

The sulfamic acid compound may be a compound represented by the following general formula [1] or salts thereof.

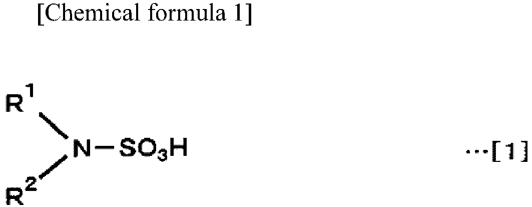

In the general formula [1], R¹ and R² each independently represent a hydrogen atom or a hydrocarbon group having 1 to 8 carbon atoms.

Such a sulfamic acid compound can include, for example, N-methylsulfamic acid, N,N-dimethylsulfamic acid, N-phenylsulfamic acid, etc. in addition to sulfamic acid in which R¹ and R² are both hydrogen atoms. Among the sulfamic acid compounds used in the present invention, examples of the salts of the compounds can include alkali metal salts such as sodium salts and potassium salts; alkaline earth metal salts such as calcium salts, strontium salts, and barium salts; other metal salts such as manganese salts, copper salts, zinc salts, iron salts, cobalt salts, and nickel salts; ammonium salts; guanidine salts, etc., and specifically include sodium sulfamate, potassium sulfamate, calcium sulfamate, strontium sulfamate, barium sulfamate, iron sulfamate, zinc sulfamate, etc. The sulfamic acids and sulfamates thereof can be used alone or in combination of two or more.

When a chlorine-based oxidizing agent such as hypochlorite and/or a bromine-based oxidizing agent is mixed with a sulfamic acid compound such as sulfamate, these are bonded to form chlorosulfamate and stabilized, and do not cause differences in dissociation depending on pH, as occurs with conventional chloramine, and thus fluctuations in free chlorine and/or free bromine concentration, making it possible to maintain a stable free chlorine and/or free bromine concentration in the water.

Generally, as the ratio of the chlorine-based oxidizing agent and/or the bromine-based oxidizing agent to the sulfamic acid compound, it is preferable to set the sulfamic acid compound to 0.5 to 5.0 moles per mole of the effective chlorine amount of the chlorine-based oxidizing agent and/or the bromine-based oxidizing agent converted into effective chlorine, and more preferably to 1.0 to 2.5 moles. If the sulfamic acid ratio exceeds the above upper limit, the microorganism contamination suppression effects of the present invention cannot be obtained sufficiently. If the sulfamic acid ratio is less than 1 mole, decomposition of sulfamic acid occurs during production.

The chlorine-based oxidizing agent and/or the bromine-based oxidizing agent and the sulfamic acid compound may be added as a mixed aqueous solution or may be added separately.

The stabilized chlorine-based oxidizing agent and/or the stabilized bromine-based oxidizing agent according to the present invention may contain components other than the chlorine-based oxidizing agent and/or the bromine-based oxidizing agent and the sulfamic acid compound within a range that does not impair the effects thereof. Other components include an alkaline agent, azoles, an anionic polymer, phosphonic acids, etc.

The alkaline agent is used to stabilize the chlorine-based oxidizing agent and/or the bromine-based oxidizing agent in the stabilized chlorine-based oxidizing agent and/or the stabilized bromine-based oxidizing agent. As the alkaline agent, sodium hydroxide, potassium hydroxide, etc. are usually used.

### <Addition amount and addition form of the stabilized chlorine-based oxidizing agent and/or stabilized bromine-based oxidizing agent>

In the present invention in which the stabilized chlorine-based oxidizing agent and/or the stabilized bromine-based oxidizing agent is intermittently added, the stabilized chlorine-based oxidizing agent and/or the stabilized bromine-based oxidizing agent having the sulfamic acid ratio of preferably about 1.0 to 2.5 moles is intermittently added to the water system so that the ratio of the addition pause time to the addition time (addition pause time/addition time) is 0.1 or more.

Where the ratio of addition pause time/addition time is less than 0.1, the effect of improving the microorganism contamination suppression effects by performing intermittent addition cannot be obtained. The ratio of addition pause time/addition time may be 0.1 or more, but from the viewpoint of the microorganism contamination suppression effects, the ratio of addition pause time/addition time is preferably 1.0 or more. On the other hand, if the ratio of addition pause time/addition time is excessively large, there is a risk of microorganism contamination progressing during the pause time, so the ratio of addition pause time/addition time is preferably 100 or less, particularly preferably 50 or less.

The addition amount of the stabilized chlorine-based oxidizing agent and/or the stabilized bromine-based oxidizing agent during the period of adding the stabilized chlorine-based oxidizing agent and/or the stabilized bromine-based oxidizing agent in the present invention, in which the stabilized chlorine-based oxidizing agent and/or the stabilized bromine-based oxidizing agent is added intermittently, differs also depending on the ratio of addition pause time/addition time and the microorganism contamination load of the raw water, but it is preferable to set the addition amount of effective chlorine conversion relative to the water system to be treated, for example, RO water supply, to 0.1 mg/L-Cl₂ or more, particularly 0.5 mg/L-Cl₂ or more, and 100 mg/L-Cl₂ or less, particularly 50 mg/L-Cl₂ or less. When the addition amount of the stabilized chlorine-based oxidizing agent and/or the stabilized bromine-based oxidizing agent is within the above range, favorable microorganism contamination suppression effects can be obtained while keeping chemical costs low.

### Examples

The effects of the present invention will be demonstrated below with reference to examples, comparative examples, and test examples.

The compounding composition of Chemical 1 used hereinafter is as shown in Table 1 below.

**[Table 1]**

| | | Chemical 1 |
|---|---|---|
| Chemical combination (part by mass) | Water | Residue |
| | 48% by mass sodium hydroxide | 12 to 24 |
| | Sulfamic acid | 18.0 |
| | 12% by mass sodium hypochlorite (12% as effective chlorine) | 50.0 |
| | Total amount (100% by mass) | 100 |
| H₃NSO₃/Cl₂ molar ratio | | 2.2 |

### [Example 1, Comparative Example 1]

An experiment was conducted to examine the effects of suppressing microorganism contamination brought by intermittent addition of the stabilized chlorine-based oxidizing agent. The effects of suppressing microorganism contamination were evaluated based on the degree of increase in differential pressure (pressure loss in the flow path) using the membrane fouling simulator in Non-Patent Document 1.

Substrates were added to the raw water (water to be treated) to promote the biofouling effect caused by microorganisms. Specifically, the following substrates were added to the raw water, citric acid: 1.2 mg/L as C, ammonium chloride: 0.6 mg/L as N, and sodium dihydrogen phosphate: 0.2 mg/L as P, to prepare the water to be treated.

The pH of the raw water was 7 to 8.5.

Addition (addition amount 3.0 mg/L-Cl₂) of the stabilized chlorine-based oxidizing agent (Chemical 1) for 1 hour and addition pause for 5 hours were repeated in Example 1. In Comparative Example 1, the stabilized chlorine-based oxidizing agent was added to the raw water so that the constant addition amount was 0.6 mg/L-Cl₂. In addition, from the 1.5^{th} day of water flow, sodium bisulfite (SBS) was further added to the above water to be treated so that the reducing agent concentration in the water to be treated was 0.1 mg/L-Cl₂.

The results are shown in FIG. 1.

It can be seen from FIG. 1 that the increase in differential pressure can be effectively suppressed in Example 1 despite that the total addition amount of Chemical 1 is less in Example 1 than in Comparative Example 1.

It was shown that in a system where sodium bisulfite remains, microorganism contamination can be effectively suppressed by intermittently adding a stabilized chlorine-based oxidizing agent.

Although the present invention has been described in detail with reference to specific embodiments, it will be apparent to those skilled in the art that various modifications can be made without departing from the spirit and scope of the present invention.

This application is based on Japanese Patent Application No. 2021-205985 filed on December 20, 2021, the entirety of which is incorporated by reference.

## Claims

1. A method for suppressing microorganism contamination in a water system that contains a reducing agent, **characterized in** comprising:
intermittently adding a stabilized chlorine-based oxidizing agent composed of a chlorine-based oxidizing agent and a sulfamic acid compound, and/or a stabilized bromine-based oxidizing agent composed of a bromine-based oxidizing agent and a sulfamic acid compound to the water system so that a ratio of an addition pause time to an addition time of the stabilized chlorine-based oxidizing agent and/or the stabilized bromine-based oxidizing agent is 0.1 or more.

2. The method for suppressing microorganism contamination in the water system according to claim 1, **characterized in that** the water system is a reverse osmosis membrane water supply system.

3. The method for suppressing microorganism contamination in the water system according to claim 1 or 2, **characterized in that** a concentration of the reducing agent in the water system is 0.01 mg/L-Cl₂ or more.

4. The method for suppressing microorganism contamination in the water system according to any one of claims 1 to 3, **characterized in that** the reducing agent is sodium bisulfite.

5. The method for suppressing microorganism contamination in the water system according to any one of claims 1 to 4, **characterized in that** the stabilized chlorine-based oxidizing agent and/or the stabilized bromine-based oxidizing agent is intermittently added to the water system so that the ratio of the addition pause time to the addition time of the stabilized chlorine-based oxidizing agent and/or the stabilized bromine-based oxidizing agent is 1.0 or more and 100 or less.

6. The method for suppressing microorganism contamination in the water system according to any one of claims 1 to 5, **characterized in that** the stabilized chlorine-based oxidizing agent is a stabilized chlorine-based oxidizing agent in which a ratio of the sulfamic acid compound to 1 mole of effective chlorine of the chlorine-based oxidizing agent is 0.5 to 5.0 moles, and the stabilized bromine-based oxidizing agent is a stabilized bromine-based oxidizing agent in which a ratio of the sulfamic acid compound to 1 mole of effective chlorine conversion amount of the bromine-based oxidizing agent is 0.5 to 5.0 moles.

7. The method for suppressing microorganism contamination in the water system according to any one of claims 1 to 6, **characterized in that** an addition amount of the stabilized chlorine-based oxidizing agent and/or the stabilized bromine-based oxidizing agent to the water system during the addition time is 0.1 to 100 mg/L-Cl₂ as an addition amount of effective chlorine conversion.
